# EUROPÄISCHE PATENTSCHRIFT

(11) **EP 3 453 144 B1**
(45) Veröffentlichungstag und Bekanntmachung des Hinweises auf die Patenterteilung: **07.08.2019**
(21) Anmeldenummer: 17704669.5
(22) Anmeldetag: 02.02.2017
(51) Int. Cl.: H04L 12/403

(54) **VERFAHREN ZUR INTEGRATION EINES WEITEREN BUSTEILNEHMERS IN EIN BUSSYSTEM UND BUSSYSTEM**
METHOD FOR INTEGRATING A FURTHER BUS SUBSCRIBER INTO A BUS SYSTEM, AND BUS SYSTEM
PROCÉDÉ D'INTÉGRATION D'UN AUTRE ABONNÉ DE BUS DANS UN SYSTÈME DE BUS, ET SYSTÈME DE BUS

(30) Priorität: 02.05.2016 DE 102016005313
(43) Veröffentlichungstag der Anmeldung: 13.03.2019
(73) Patentinhaber: SEW-EURODRIVE GmbH & Co. KG, 76646 Bruchsal (DE)
(72) Erfinder: FUCHS, Manuel, 76709 Kronau (DE)
(86) Internationale Anmeldenummer: PCT/EP2017/025017
(87) Internationale Veröffentlichungsnummer: WO 2017/190842

(56) Entgegenhaltungen:
- EP-A1- 2 618 519
- US-A- 5 029 334
- US-A1- 2002 091 838
- US-A1- 2009 125 656

## Beschreibung

Die Erfindung betrifft ein Verfahren zur Integration eines weiteren Busteilnehmers in ein Bussystem und ein Bussystem.

Die DE 10 2005 056 294 A1 zeigt ein Verfahren zum Zuordnen von Adressen an Busteilnehmer eines Bussystems und eine Anlage.

**Aus der** EP 1 124 351 A2 **ist als nächstliegender Stand der Technik ein Kommunikationsprotokoll für Knoten einer Daisy Chain bekannt.**

**Aus der** DE 102 15 720 A1 **ist ein Datenbus-Netzwerk bekannt.**

**Aus der** EP 0 807 887 A2 **ist ein Verfahren zum Adressieren einer Anzahl peripherer Module von der Zentraleinheit in einem BUS-Leitungssystem bekannt.**

**Aus der** DE 196 47 668 A1 **ist eine Slavestation, Masterstation, BUS-System und ein Verfahren zum Betreiben eines BUS-Systems bekannt.**

**Aus der** US 5 029 334 A **ist als nächstliegender Stand der Technik ein Verfahren zum Betreiben eines hierarchischen seriellen Bussystems bekannt, das eine Masterstation und mehrere Slavestationen aufweist.**

Der Erfindung liegt daher die Aufgabe zugrunde, ein Verfahren zur Integration eines weiteren Busteilnehmers in ein Bussystem und ein Bussystem weiterzubilden, wobei die Sicherheit verbessert werden soll.

Erfindungsgemäß wird die Aufgabe bei dem Verfahren zur Integration eines weiteren Busteilnehmers in ein Bussystem nach den in Anspruch 1 angegebenen Merkmalen und bei dem Bussystem nach den in Anspruch 6 angegebenen Merkmalen gelöst.

Wichtige Merkmale der Erfindung bei dem Verfahren zur Integration eines weiteren Busteilnehmers in ein Bussystem, aufweisend ein Mastermodul und seriell angeordnete Busteilnehmer, sind, dass das Verfahren die folgenden zeitlich aufeinander folgenden Verfahrensschritte aufweist:
wobei in einem ersten Verfahrensschritt der weitere Busteilnehmer ein Datenpaket an das Mastermodul schickt, um sich bei dem Mastermodul anzumelden,
wobei in einem zweiten Verfahrensschritt ein zwischen dem weiteren Busteilnehmer und dem Mastermodul angeordneter Busteilnehmer das Datenpaket stoppt und prüft, ob das Bussystem bereits eine Freigabe erhalten hat,
wobei in einem dritten Verfahrensschritt der Busteilnehmer das Datenpaket an das Mastermodul weiterleitet, wenn das Bussystem bislang keine Freigabe erhalten hat,
oder wobei in einem, insbesondere alternativen, dritten Verfahrensschritt, wenn das Bussystem bereits eine Freigabe erhalten hat, der Busteilnehmer das Datenpaket speichert und abwartet, bis die Freigabe des Bussystems aufgehoben wird, und, nachdem die Freigabe aufgehoben wurde, das gespeicherte Datenpaket an das Mastermodul weiterleitet.

Von Vorteil ist dabei, dass ein weiterer Busteilnehmer, insbesondere der eine längere Zeitspanne zur Aktivierung benötigt, in einfacher Art und Weise nachträglich in das Bussystem integrierbar ist.

Vorteilhafterweise wird im Produktionsmodus, also nach erteilter Freigabe, kein Busteilnehmer in das Bussystem aufgenommen.

Vorteilhafterweise wird die Aufnahme in das Bussystem mittels des zwischen dem Mastermodul und dem weiteren Busteilnehmer angeordneten Busteilnehmers blockiert, so dass das Mastermodul entlastet wird. Somit ist die Sicherheit verbessert.

Vorteilhafterweise wird der weitere Busteilnehmer bei einem Neustart des Bussystems automatisch in das Bussystem aufgenommen.

Bei einer vorteilhaften Ausgestaltung fordert das Mastermodul zur Initialisierung des Bussystems die Busteilnehmer auf, sich bei dem Mastermodul anzumelden, wobei in einem nachfolgenden Verfahrensschritt ein dem Mastermodul nachgeordneter erster Busteilnehmer sich bei dem Mastermodul anmeldet, wobei in einem nachfolgenden Verfahrensschritt der erste Busteilnehmer eine vorgegebene Zeitspanne abwartet, ob ein dem ersten Busteilnehmer nachgeordneter zweiter Busteilnehmer sich bei dem Mastermodul anmeldet. Von Vorteil ist dabei, dass das die Busteilnehmer das Mastermodul entlasten. Somit ist die Sicherheit verbessert.

Vorteilhafterweise ist die vorgegebene Zeitspanne an die Busteilnehmer anpassbar, so dass lange genug abgewartet wird, damit ein Busteilnehmer, der eine längere Zeitspanne zur Aktivierung benötigt, ebenfalls sicher angemeldet wird.

Bei einer vorteilhaften Ausgestaltung schließt der erste Busteilnehmer das Bussystem, falls sich innerhalb der vorgegebenen Zeitspanne kein zweiter Busteilnehmer bei dem Mastermodul anmeldet. Von Vorteil ist dabei, dass das Bussystem sich mittels des Verfahrens selbstständig initialisiert. Dabei erkennt das Bussystem welcher der von dem Mastermodul am weitesten entfernte Busteilnehmer ist und dieser schließt das Bussystem selbsttätig. Somit wird ein Betreiber des Bussystems entlastet, da er nicht innerhalb der Anlage eine Abschlussimpedanz anschließen muss. Somit ist die Sicherheit verbessert.

Bei einer vorteilhaften Ausgestaltung meldet ein zweiter Busteilnehmer sich innerhalb der vorgegebenen Zeitspanne bei dem Mastermodul an und wartet eine weitere vorgegebene Zeitspanne ab, ob ein dem zweiten Busteilnehmer nachgeordneter dritter Busteilnehmer sich bei dem Mastermodul anmeldet und der zweite Busteilnehmer das Bussystem schließt, falls sich innerhalb der weiteren vorgegebenen Zeitspanne kein dritter Busteilnehmer bei dem Mastermodul anmeldet. Von Vorteil ist dabei, dass das Bussystem sich mittels des Verfahrens selbstständig initialisiert. Dabei erkennt das Bussystem welcher der von dem Mastermodul am weitesten entfernte Busteilnehmer ist und dieser schließt das Bussystem selbsttätig. Somit wird ein Betreiber des Bussystems entlastet, da er nicht innerhalb der Anlage eine Abschlussimpedanz anschließen muss. Somit ist die Sicherheit verbessert.

Bei einer vorteilhaften Ausgestaltung wird die Freigabe durch eine dem Mastermodul übergeordnete Steuerung erteilt und/oder widerrufen. Von Vorteil ist dabei, dass mittels der Freigabe das Bussystem nach erfolgreicher Initialisierung in einem zusätzlichen Verfahrensschritt eine externe Freigabe erhält. Erst nach der Freigabe geht das Bussystem in einen Produktionsmodus über, in dem die Busteilnehmer von dem Mastermodul angesteuert werden.

Bei einer vorteilhaften Ausgestaltung werden zur Zuordnung von Adressen an die Busteilnehmer, die zeitlich aufeinander folgenden Verfahrensschritte ausgeführt:
wobei in einem Verfahrensschritt das Mastermodul einem ersten Busteilnehmer eine erste Adresse zuordnet und diese erste Adresse an den ersten Busteilnehmer sendet, insbesondere wobei die erste Adresse eine natürliche Zahl n ist, insbesondere wobei die erste Adresse 0 oder 1 ist,
wobei in einem nachfolgenden Verfahrensschritt der erste Busteilnehmer die erste Adresse um eins inkrementiert und einem zweiten Busteilnehmer als zweite Adresse zuordnet und diese zweite Adresse an den zweiten Busteilnehmer sendet, insbesondere wobei die zweite Adresse die natürliche Zahl (n+1) ist,
wobei in einem weiteren Verfahrensschritt der zweite Busteilnehmer sich mit seiner zweiten Adresse bei dem Mastermodul anmeldet.

Von Vorteil ist dabei, dass die Vergabe der Adressen an die Busteilnehmer automatisch erfolgt. Somit ist die Inbetriebnahme des Bussystems sicher und schnell ausführbar.

Vorteilhafterweise passiert ein Datenpaket bei der Adressierung einen inaktiven Busteilnehmer, so dass der nächste aktive Busteilnehmer des Bussystems die Adresse erhält und sich damit bei dem Mastermodul anmeldet.

Bei einer vorteilhaften Ausgestaltung inkrementiert in einem vierten Verfahrensschritt der zweite Busteilnehmer die zweite Adresse um eins und ordnet diese einem dritten Busteilnehmer als dritte Adresse zu und sendet diese dritte Adresse an den dritten Busteilnehmer, insbesondere wobei die dritte Adresse die natürliche Zahl (n+2) ist, wobei in einem fünften Verfahrensschritt der dritte Busteilnehmer sich mit seiner dritten Adresse bei dem Mastermodul anmeldet. Von Vorteil ist dabei, dass jeder Busteilnehmer, insbesondere jeder aktive Busteilnehmer, mittels des Verfahrens automatisch adressierbar ist.

Bei einer vorteilhaften Ausgestaltung wird in einem weiteren Verfahrensschritt einem m-ten Busteilnehmer die Adresse m zugeordnet und der m-te Busteilnehmer meldet sich mit der Adresse m bei dem Mastermodul an, wobei m eine natürliche Zahl ist, insbesondere wobei m ungleich n ist, insbesondere wobei m gleich 15 ist, wobei der m-te Busteilnehmer die Adresse m einem dem m-ten Busteilnehmer nachgeordneten Busteilnehmer zuordnet und die Adresse m an den nachgeordneten Busteilnehmer sendet, insbesondere wobei der m-te Busteilnehmer die Adresse nicht inkrementiert, wobei (m-1) die maximal mögliche Anzahl der Busteilnehmer im Bussystem ist. Von Vorteil ist dabei, dass die Anzahl der Busteilnehmer begrenzbar ist. Somit wird verhindert, dass die Datenpakete zu lang werden und die Übertragungsgeschwindigkeit wird verbessert. Vorteilhafterweise wird die Anzahl der Busteilnehmer automatisch begrenzt.

Bei einer vorteilhaften Ausgestaltung bricht das Mastermodul das Verfahren ab und sendet eine Fehlermeldung, wenn sich ein Busteilnehmer mit der Adresse m bei dem Mastermodul anmeldet. Von Vorteil ist dabei, dass das Bussystem selbstständig erkennt, wenn zu viele Busteilnehmer sich anmelden. Vorteilhafterweise wird die Fehlermeldung an eine übergeordnete Steuerung gesendet. Vorteilhafterweise erzeugt das Mastermodul ein Warnsignal, insbesondere einen Warnton oder eine Warnlicht.

Bei einer vorteilhaften Ausgestaltung werden zur Notabschaltung des Bussystems die zeitlich aufeinander folgenden Verfahrensschritte ausgeführt:
wobei in einem ersten Verfahrensschritt ein Busteilnehmer und/oder das Mastermodul einen Fehlerzustand erkennt,
wobei in einem zweiten Verfahrensschritt der Busteilnehmer und/oder das Mastermodul ein Notsignal an alle Busteilnehmer und das Mastermodul sendet,
wobei in einem dritten Verfahrensschritt ein weiterer Busteilnehmer das Notsignal empfängt, sofort an einen benachbarten Busteilnehmer weiterleitet und zeitgleich auswertet,
wobei in einem vierten Verfahrensschritt der weitere Busteilnehmer sich selbst abschaltet.

Von Vorteil ist dabei, dass alle Busteilnehmer des Bussystems innerhalb kurzer Zeit abschaltbar sind. Vorteilhafterweise wird das Notsignal nicht erst vollständig ausgewertet, sondern, sobald es als Notsignal erkannt wurde, gleichzeitig an alle Busteilnehmer und das Mastermodul weitergeleitet.

Bei einer vorteilhaften Ausgestaltung unterbricht das Notsignal ein Datenpaket. Von Vorteil ist dabei, dass das Notsignal sofort an alle Busteilnehmer und das Mastermodul verschickt wird, sobald der Fehlerzustand erkannt wurde. Vorteilhafterweise muss nicht abgewartet werden, bis das Datenpaket vollständig übermittelt wurde. Somit ist eine schnelle Abschaltung aller Busteilnehmer ermöglicht. Die Sicherheit ist verbessert.

Bei einer vorteilhaften Ausgestaltung wird die Übertragung des unterbrochenen Datenpaketes nicht fortgesetzt und das unterbrochene Datenpaket verworfen. Von Vorteil ist dabei, dass ein durch die Unterbrechung auftretender Fehler in dem Datenpaket sich nicht auf das Bussystem auswirkt. Somit ist die Sicherheit verbessert.

Bei einer vorteilhaften Ausgestaltung weisen alle Datenpakete eine identische Länge, insbesondere Signallänge, auf, wobei die Länge des Notsignals, insbesondere Signallänge, kürzer ist als die Länge der Datenpakete. Von Vorteil ist dabei, dass das Notsignal schneller übertragbar ist als ein Datenpaket. Somit ist die Sicherheit verbessert.

Bei einer vorteilhaften Ausgestaltung sind zwei aufeinanderfolgende Datenpakete zeitlich voneinander beabstandet mittels einer Sendepause, wobei das Notsignal eine Sendepause unterbricht. Von Vorteil ist dabei, dass das Notsignal unabhängig vom Status der Datenleitung sofort sendbar ist. Vorteilhafterweise ist das Notsignal jederzeit sendbar, unabhängig davon ob zum Sendezeitpunkt des Notsignals gerade ein Datenpaket übertragen wird oder eine Sendepause vorliegt.

Vorteilhafterweise ist das Notsignal kürzer als die Sendepause.

Bei einer vorteilhaften Ausgestaltung weist das Bussystem zwei Datenleitungen auf, wobei der Busteilnehmer und/oder das Mastermodul das Notsignal zeitgleich mittels beider Datenleitungen sendet. Von Vorteil ist dabei, dass das Notsignal in einem Kommunikationsring schneller alle Busteilnehmer erreicht, wenn es mittels der beiden Datenleitungen in zwei entgegengesetzte Richtungen gesendet wird, als wenn das Notsignal nur mittels einer Datenleitung in einer Richtung gesendet wird.

Wichtige Merkmale der Erfindung bei dem Bussystem, wobei ein weiterer Busteilnehmer mittels eines Verfahrens zur Integration eines weiteren Busteilnehmers wie zuvor beschrieben und/oder nach einem der auf das Verfahren zur Integration eines weiteren Busteilnehmers gerichteten Schutzansprüche in das Bussystem integrierbar ist, sind, dass das Bussystem ein Mastermodul und Busteilnehmer aufweist, die seriell angeordnet sind, wobei das Mastermodul und die Busteilnehmer mittels zumindest einer Datenleitung miteinander verbunden sind.

Von Vorteil ist dabei, dass ein weiterer Busteilnehmer, insbesondere der eine längere Zeitspanne zur Aktivierung benötigt, in einfacher Art und Weise nachträglich in das Bussystem integrierbar ist.

Vorteilhafterweise wird im Produktionsmodus, also nach erteilter Freigabe, kein Busteilnehmer in das Bussystem aufgenommen.

Vorteilhafterweise wird die Aufnahme in das Bussystem mittels eines zwischen dem Mastermodul und dem weiteren Busteilnehmer angeordneten Busteilnehmers blockiert, so dass das Mastermodul entlastet wird. Somit ist die Sicherheit verbessert.

Vorteilhafterweise wird der weitere Busteilnehmer bei einem Neustart des Bussystems automatisch in das Bussystem aufgenommen.

Bei einer vorteilhaften Ausgestaltung weist das Bussystem zumindest eine erste Datenleitung und eine zweite Datenleitung auf. Von Vorteil ist dabei, dass mittels der ersten Datenleitung ein Datenpaket vom Mastermodul an die Busteilnehmer sendbar ist und, insbesondere gleichzeitig, mittels der zweiten Datenleitung ein jeweiliges Datenpaket von einem jeweiligen Busteilnehmer an das Mastermodul sendbar ist. Somit ist die Geschwindigkeit der Datenübertragung erhöht und die Sicherheit ist verbessert. Vorteilhafterweise wird zum Schließen des Bussystems die erste Datenleitung mit der zweiten Datenleitung vom letzten Busteilnehmer verbunden, insbesondere kurzgeschlossen. Die erste und die zweite Datenleitung bilden also einen Kommunikationsring.

Bei einer vorteilhaften Ausgestaltung ist mittels der ersten Datenleitung ein Datenpaket vom Mastermodul an die Busteilnehmer sendbar. Von Vorteil ist dabei, dass die erste Datenleitung und die zweite Datenleitung parallel anordenbar sind. Vorteilhafterweise sind dabei jederzeit Datenpakete von dem Mastermodul an die Busteilnehmer sendbar mittels der ersten Datenleitung. Somit wird die Datenübertragung vom Mastermodul an die Busteilnehmer nicht unterbrochen, um ein jeweiliges Datenpaket von einem jeweiligen Busteilnehmer an das Mastermodul zu senden.

Bei einer vorteilhaften Ausgestaltung ist mittels der zweiten Datenleitung ein jeweiliges Datenpaket von einem jeweiligen Busteilnehmer an das Mastermodul sendbar. Von Vorteil ist dabei, dass die erste Datenleitung und die zweite Datenleitung parallel anordenbar sind. Vorteilhafterweise sind dabei jederzeit Datenpakete von einem jeweiligen Busteilnehmer an das Mastermodul sendbar mittels der zweiten Datenleitung. Somit wird die Datenübertragung von den Busteilnehmern an das Mastermodul nicht unterbrochen, um ein Datenpaket von dem Mastermodul an einen jeweiligen Busteilnehmer zu senden.

Bei einer vorteilhaften Ausgestaltung weist die jeweilige Datenleitung zumindest ein jeweiliges Datenkabel auf, wobei jeder Busteilnehmer mittels eines jeweiligen Datenkabels mit dem ihm vorgeordneten beziehungsweise nachgeordneten Busteilnehmer oder dem Mastermodul verbunden ist. Von Vorteil ist dabei, dass die jeweilige Datenleitung modular ausführbar ist. Somit ist ein weiterer Busteilnehmer in einfacher Art und Weise mittels eines weiteren Datenkabels mit dem Bussystem verbindbar.

Bei einer vorteilhaften Ausgestaltung weist jedes Datenkabel zwei Gegensteckverbinderteile auf und jeder Busteilnehmer weist ein erstes Steckverbinderteil zur Verbindung mit dem jeweiligen vorgeordneten Busteilnehmer mittels eines jeweiligen Datenkabels auf und jeder Busteilnehmer weist ein zweites Steckverbinderteil zur Verbindung mit dem jeweiligen nachgeordneten Busteilnehmer auf. Von Vorteil ist dabei, dass die Busteilnehmer des Bussystems in einfacher Art und Weise lösbar miteinander verbindbar sind. Somit ist ein weiterer Busteilnehmer in einfacher Art und Weise mit dem Bussystem verbindbar oder ein Busteilnehmer ist in einfacher Art und Weise von dem ihm vorgeordneten Busteilnehmer und/oder dem ihm nachgeordneten Busteilnehmer trennbar.

Bei einer vorteilhaften Ausgestaltung sind das jeweilige Datenkabel der ersten Datenleitung und das jeweilige Datenkabel der zweiten Datenleitung zwischen zwei benachbarten Busteilnehmern in einer Kabelummantelung angeordnet, insbesondere wobei die Kabelummantelung die Datenkabel in Umfangsrichtung umgibt, insbesondere einhüllt. Von Vorteil ist dabei, dass der Verkabelungsaufwand reduziert ist. Vorteilhafterweise sind die erste und zweite Datenleitung mit einem gemeinsamen Steckverbinderteil verbunden, so dass nur jeweils ein Steckverbinderteil zur Verbindung eines Busteilnehmers mit dem ihm vorgeordneten beziehungsweise nachgeordneten Busteilnehmer an den Busteilnehmer zu stecken ist. Vorteilhafterweise ist die Steckverbindung verpolungssicher ausführbar.

Bei einer vorteilhaften Ausgestaltung ist eine Versorgungsleitung und/oder eine Masseleitung für die Busteilnehmer in der Kabelummantelung angeordnet. Von Vorteil ist dabei, dass der Verkabelungsaufwand reduziert ist. Vorteilhafterweise sind die Datenkabel und die Versorgungsleitung und/oder die Masseleitung mit einem gemeinsamen Steckverbinderteil verbunden, so dass nur jeweils ein Steckverbinderteil zur Verbindung eines Busteilnehmers mit dem ihm vorgeordneten beziehungsweise nachgeordneten Busteilnehmer an den Busteilnehmer zu stecken ist. Vorteilhafterweise ist die Steckverbindung verpolungssicher ausführbar.

Bei einer vorteilhaften Ausgestaltung weist jeder Busteilnehmer einen Schalter auf, wobei der Schalter mit einer jeweiligen Datenleitung verbunden ist, wobei der Schalter eingerichtet ist, die Datenübertragung entlang der jeweiligen Datenleitung zu unterbrechen. Von Vorteil ist dabei, dass der jeweilige Busteilnehmer mittels des Schalters eingerichtet ist, Datenpakete, die nicht zu dem Mastermodul gelangen sollen, zu stoppen. Somit ist das Mastermodul entlastbar mittels der Busteilnehmer.

Bei einer vorteilhaften Ausgestaltung weist jeder Busteilnehmer ein Zeitmessmittel auf. Von Vorteil ist dabei, dass der jeweilige Busteilnehmer mittels seines Zeitmessmittels eingerichtet ist, eine Zeitspanne zu messen, innerhalb derer ein weiterer Busteilnehmer auf ein Datenpaket antwortet, insbesondere ein weiteres Datenpaket sendet. Somit ist das weitere Datenpaket abhängig von dieser Zeitspanne auswertbar, insbesondere blockierbar mittels des Schalters. Dadurch ist das Mastermodul entlastbar.

Bei einer vorteilhaften Ausgestaltung weist jeder Busteilnehmer eine Logikschaltung auf, insbesondere wobei mittels der Logikschaltung Datenpakete des Mastermoduls und/oder der Busteilnehmer auswertbar sind. Von Vorteil ist dabei, dass mittels der Logikschaltung der Schalter und/oder das Zeitmessmittel ansteuerbar sind, insbesondere in Abhängigkeit von einem Datenpaket.

Vorteilhafterweise weist die jeweilige Logikschaltung ein Speichermittel auf, wobei mittels des Speichermittels Datenpakete speicherbar sind. Somit ist ein Datenpaket, das von einem Busteilnehmer gestoppt wurde, von dessen Speichermittel speicherbar und zu einem späteren Zeitpunkt an das Mastermodul und/oder einen Busteilnehmer sendbar.

Vorteilhafterweise ist die Logikschaltung eingerichtet, den Status des Bussystems auszuwerten, insbesondere zu erkennen, ob eine Freigabe für das Bussystem erteilt wurde.

Bei einer vorteilhaften Ausgestaltung weist jeder Busteilnehmer eine elektronische Schaltung auf, wobei die elektronische Schaltung den Schalter und/oder das Zeitmessmittel und/oder die Logikschaltung aufweist, insbesondere wobei der Schalter und/oder das Zeitmessmittel und/oder die Logikschaltung in die elektronische Schaltung integriert sind. Von Vorteil ist dabei, dass die elektronische Schaltung kompakt und sicher ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

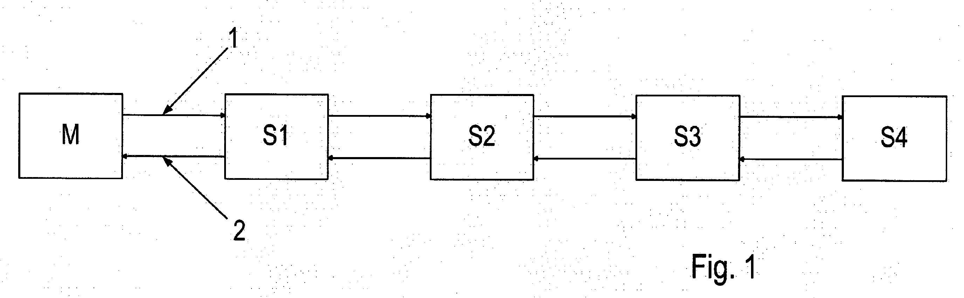

In der Figur 1 ist ein erfindungsgemäßes Bussystem schematisch dargestellt.
Figur 2 zeigt den zeitlichen Verlauf von Datenpaketen auf einem Datenbus.
Figur 3 zeigt den zeitlichen Verlauf von Datenpaketen und einem Notsignal auf dem Datenbus in einem ersten Fallbeispiel.
Figur 4 zeigt den zeitlichen Verlauf von Datenpaketen und einem Notsignal auf dem Datenbus in einem zweiten Fallbeispiel.

Das erfindungsgemäße Bussystem weist ein Mastermodul M und Busteilnehmer (S1, S2, S3, S4) auf, die seriell angeordnet und miteinander verbunden sind. Dabei weist das Bussystem einen dem Mastermodul M nachgeordneten ersten Busteilnehmer S1 auf. Das Bussystem weist einen dem ersten Busteilnehmer S1 nachgeordneten zweiten Busteilnehmer S2 auf, wobei der erste Busteilnehmer S1 dem zweiten Busteilnehmer S2 vorgeordnet ist. Der zweite Busteilnehmer S2 ist einem dritten Busteilnehmer S3 vorgeordnet und der dritte Busteilnehmer S3 ist dem zweiten Busteilnehmer S2 nachgeordnet. Der dritte Busteilnehmer S3 ist einem vierten Busteilnehmer S4 vorgeordnet und der vierte Busteilnehmer S4 ist dem dritten Busteilnehmer S3 nachgeordnet.

Dabei ist ein einem anderen Busteilnehmer (S1, S2, S3, S4) nachgeordneter Busteilnehmer (S1, S2, S3, S4) in Richtung der seriellen Anordnung weiter von dem Mastermodul M entfernt als der andere Busteilnehmer (S1, S2, S3, S4). Der andere Busteilnehmer (S1, S2, S3, S4), der in Richtung der seriellen Anordnung weniger weit von dem Mastermodul M entfernt ist als der Busteilnehmer (S1, S2, S3, S4), ist dem Busteilnehmer (S1, S2, S3, S4) vorgeordnet.

Das Bussystem ist beispielsweise eine industrielle Anlage, die verschiedene Geräte, beispielsweise Antriebe oder Elektronikbaugruppen, wie Antriebsumrichter für Elektromotoren, als Busteilnehmer (S1, S2, S3, S4) aufweist.

Der Datenbus weist eine erste Datenleitung 1 und eine zweite Datenleitung 2 auf, die jeweils die Busteilnehmer (S1, S2, S3, S4) und das Mastermodul M seriell miteinander verbinden.

Mittels der ersten Datenleitung 1 sendet das Mastermodul M Datenpakete (3, 4) an die Busteilnehmer (S1, S2, S3, S4), beispielsweise Steuerbefehle. Mittels der zweiten Datenleitung 2 senden die Busteilnehmer (S1, S2, S3, S4) Datenpakete (3, 4) an das Mastermodul M, beispielsweise Statusinformationen.

Jeder Busteilnehmer (S1, S2, S3, S4) weist eine erste Schnittstelle und eine zweite Schnittstelle auf, die vorzugsweise jeweils als Steckverbinderteil ausgeführt sind. Jede Datenleitung (1, 2) weist zumindest ein Datenkabel auf. Jedes Datenkabel weist ein erstes Gegensteckverbinderteil und zumindest ein zweites Gegensteckverbinderteil auf zur Datenübertragung zwischen den Busteilnehmern (S1, S2, S3, S4) entlang der jeweiligen Datenleitung (1, 2).

Somit ist jeder Busteilnehmer (S1, S2, S3, S4) mittels eines ersten Steckverbinderteils und des jeweiligen Datenkabels mit einem zweiten Steckverbinderteil eines vorgeordneten Busteilnehmers (S1, S2, S3, S4) verbindbar und mittels eines zweiten Steckverbinderteils und des jeweiligen Datenkabels mit einem ersten Steckverbinderteil eines nachgeordneten Busteilnehmers (S1, S2, S3, S4) verbindbar.

Vorzugsweise sind das jeweilige Datenkabel der ersten Datenleitung 1 und das jeweilige Datenkabel der zweiten Datenleitung 2 in einer gemeinsamen Kabelummantelung geführt angeordnet. Vorzugsweise ist in dieser Kabelummantelung auch eine Versorgungsleitung und/oder eine Masseleitung für die Busteilnehmer (S1, S2, S3, S4) angeordnet.

Jeder Busteilnehmer (S1, S2, S3, S4) weist einen Schalter, insbesondere als Bestandteil einer elektronischen Schaltung, auf, der mit der jeweiligen Datenleitung (1, 2) verbunden ist. Mittels des Schalters ist die Datenübertragung entlang der jeweiligen Datenleitung (1, 2) unterbrechbar.

Jeder Busteilnehmer (S1, S2, S3, S4) weist ein Zeitmessmittel, insbesondere Timer, auf. Vorzugsweise ist das Zeitmessmittel in der elektronischen Schaltung des Busteilnehmers (S1, S2, S3, S4) integriert ausgeführt.

Mittels der elektronischen Schaltung ist also die Datenübertragung entlang der jeweiligen Datenleitung (1, 2) nach Ablauf einer vorgegebenen Zeit unterbrechbar.

Jeder Busteilnehmer (S1, S2, S3, S4) weist eine Logikschaltung auf. Vorzugsweise ist die Logikschaltung in der elektronischen Schaltung des Busteilnehmers (S1, S2, S3, S4) integriert ausgeführt.

Mittels der Logikschaltung sind Datenpakete auf dem Datenbus auswertbar, insbesondere ist der Absender eines Datenpaketes erkennbar.

Sollte ein Busteilnehmer (S1, S2, S3, S4) inaktiv sein, so wird ein Datenpaket ununterbrochen und ohne zeitliche Verzögerung durch den inaktiven Busteilnehmer (S1, S2, S3, S4) hindurch zum nachgeordneten oder vorgeordneten Busteilnehmer (S1, S2, S3, S4) weitergeleitet. Ein Datenpaket passiert einen inaktiven Busteilnehmer (S1, S2, S3, S4) ungehindert.

Vorzugsweise ist der Datenbus digital ausgeführt.

Zur Initialisierung des Bussystems sendet das Mastermodul M eine Aufforderung an die ihm nachgeordneten Busteilnehmer (S1, S2, S3, S4) sich beim Mastermodul M anzumelden. Ein dem Mastermodul M nachgeordneter aktiver Busteilnehmer (S1, S2, S3, S4) meldet sich beim Mastermodul M an und leitet die Aufforderung zur Anmeldung beim Mastermodul M an die ihm nachgeordneten Busteilnehmer (S1, S2, S3, S4) weiter. Daraufhin wartet der angemeldete Busteilnehmer (S1, S2, S3, S4) eine vorgegebene Zeitspanne ab, ob sich ein ihm nachgeordneter Busteilnehmer (S1, S2, S3, S4) beim Mastermodul M anmeldet.

Falls sich kein nachgeordneter Busteilnehmer (S1, S2, S3, S4) beim Mastermodul anmeldet, schließt der letzte angemeldete Busteilnehmer (S1, S2, S3, S4), sobald die vorgegebene Zeitspanne abgelaufen ist, das Bussystem, indem er die erste Datenleitung 1 und die zweite Datenleitung 2 miteinander verbindet, insbesondere kurzschließt. Somit wird ein Datenpaket, das mittels der ersten Datenleitung 1 vom Mastermodul M an die Busteilnehmer (S1, S2, S3, S4) gesendet wird, an dem letzten Busteilnehmer (S1, S2, S3, S4) in die zweite Datenleitung 2 weitergeleitet und zurück zum Mastermodul geleitet.

Der letzte Busteilnehmer (S1, S2, S3, S4) ist derjenige Busteilnehmer (S1, S2, S3, S4), der sich zuletzt beim Mastermodul M anmeldet und keine nachgeordneten Busteilnehmer (S1, S2, S3, S4) aufweist.

Durch einen inaktiven Busteilnehmer (S1, S2, S3, S4) wird die Aufforderung zur Anmeldung beim Mastermodul M hindurchgeleitet, ohne dass dieser sich selbst beim Mastermodul M anmeldet.

Nachdem das Bussystem geschlossen ist, wird eine Freigabe durch eine übergeordnete Steuerung oder einen Bediener erteilt und der Betrieb des Bussystems aufgenommen.

Sollte ein Busteilnehmer (S1, S2, S3, S4) sich verspätet anmelden wollen, also nachdem die vorgegebene Zeitspanne nach der Anmeldung des letzten Busteilnehmers (S1, S2, S3, S4) abgelaufen ist, so sendet dieser Busteilnehmer (S1, S2, S3, S4) ein Datenpaket an das Mastermodul M. Falls bereits eine Freigabe erteilt wurde, wird dieses Datenpaket von einem vorgeordneten Busteilnehmer (S1, S2, S3, S4), der beim Mastermodul M angemeldet ist, gestoppt und nicht zum Mastermodul M weitergeleitet.

Sobald die Freigabe widerrufen wird, wird ein Datenpaket des verspäteten Busteilnehmers (S1, S2, S3, S4) an das Mastermodul M weitergeleitet und der verspätete Busteilnehmer (S1, S2, S3, S4) wird in das Bussystem aufgenommen.

Sollte der verspätete Busteilnehmer (S1, S2, S3, S4) keine nachgeordneten Busteilnehmer (S1, S2, S3, S4) aufweisen, die beim Mastermodul M angemeldet sind, so wird dieser der neue letzte Busteilnehmer (S1, S2, S3, S4) und schließt das Bussystem, nachdem er die vorgegebene Zeitspanne zur Anmeldung eines Busteilnehmers (S1, S2, S3, S4) abgewartet hat.

Die vorgegebene Zeitspanne zur Anmeldung eines Busteilnehmers (S1, S2, S3, S4) ist an die Busteilnehmer (S1, S2, S3, S4) anpassbar. Dabei ist die Zeitspanne derart wählbar, dass Busteilnehmer (S1, S2, S3, S4), die eine längere Inbetriebnahmezeit aufweisen, sicher beim Mastermodul M angemeldet werden.

Bei der Initialisierung des Bussystems werden automatisch Busadressen für die Busteilnehmer (S1, S2, S3, S4) vergeben. Dazu sendet das Mastermodul M die Busadresse "1" an den ersten Busteilnehmer S1. Der erste Busteilnehmer S1 meldet sich mit dieser Busadresse beim Mastermodul M an und inkrementiert die Busadresse um 1 und leitet sie an den ihm nachgeordneten Busteilnehmer (S2, S3, S4) weiter. Der nachgeordnete Busteilnehmer (S1, S2, S3, S4) meldet sich mit der inkrementierten Busadresse beim Mastermodul M an, hier also die Busadresse "2", inkrementiert diese Busadresse wiederum um 1 und leitet sie an den ihm nachgeordneten Busteilnehmer (S2, S3, S4) weiter.

Zur Begrenzung der Anzahl der Busteilnehmer (S1, S2, S3, S4) im Bussystem wird ein Busteilnehmer (S1, S2, S3, S4), der eine Busadresse erhält, die größer als die maximal erlaubte Anzahl von Busteilnehmern (S1, S2, S3, S4) ist, diese Busadresse nicht weiter inkrementieren, sondern leitet die gleiche Busadresse an den ihm nachgeordneten Busteilnehmer (S1, S2, S3, S4) weiter, der sich mit dieser Busadresse beim Mastermodul M anmeldet. Sobald das Mastermodul M eine Busadresse erhält, die größer als die maximal erlaubte Anzahl von Busteilnehmern (S1, S2, S3, S4) ist, bricht das Mastermodul M die Initialisierung des Bussystems ab und sendet eine Fehlermeldung an eine dem Mastermodul M übergeordnete Steuerung.

Sollte ein Busteilnehmer (S1, S2, S3, S4), der noch nicht aktiv ist, also ein inaktiver Busteilnehmer (S1, S2, S3, S4) eine Busadresse von einem ihm vorgeordneten Busteilnehmer (S1, S2, S3, S4) oder dem Mastermodul M erhalten, so wird diese Busadresse durch den inaktiven Busteilnehmer (S1, S2, S3, S4) hindurchgeschleift ohne inkrementiert zu werden und an einen nachgeordneten Busteilnehmer (S1, S2, S3, S4) vergeben.

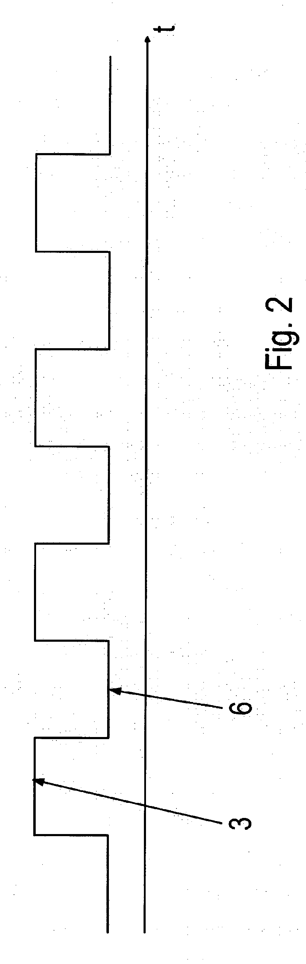

Die Figuren 2 bis 4 zeigen den zeitlichen Verlauf von Datenpaketen 3, die mittels einer jeweiligen Datenleitung (1, 2) übertragen werden. Jedes Datenpaket 3 hat eine vorgegebene Länge, die von der Anzahl der Busteilnehmer (S1, S2, S3, S4) des Bussystems abhängig ist.

Zwischen zwei zeitlich aufeinander folgenden Datenpaketen 3 wird die Datenübertragung für einen vorgegebenen Zeitraum unterbrochen, so dass zwei zeitlich aufeinander folgende Datenpakete 3 zeitlich voneinander beabstandet sind mittels einer Sendepause 6.

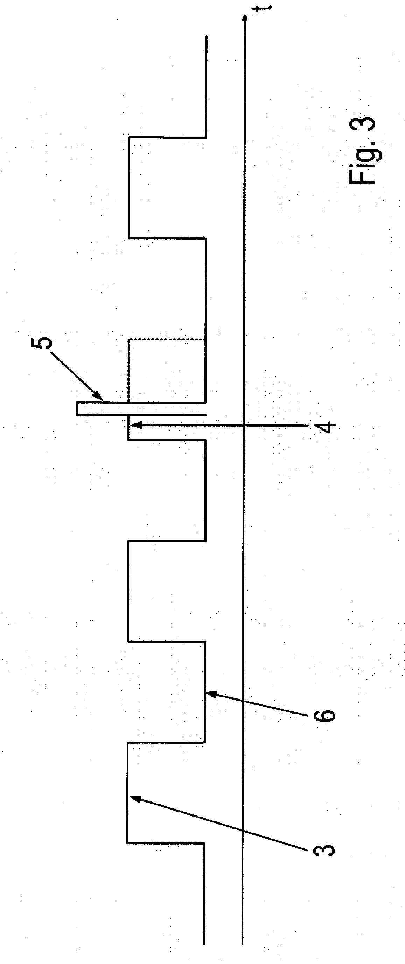

Sobald ein Busteilnehmer (S1, S2, S3, S4) oder das Mastermodul M einen Fehler feststellt, wird das zu dem Zeitpunkt gesendete Datenpaket 4 sofort unterbrochen und ein Notsignal 5 von dem jeweiligen Busteilnehmer (S1, S2, S3, S4) oder dem Mastermodul M gesendet, wie in Figur 3 dargestellt. Dieses Notsignal 5 bewirkt eine sofortige Abschaltung aller Busteilnehmer (S1, S2, S3, S4).

Das unterbrochene Datenpaket 4 wird sofort beendet und von den Busteilnehmern (S1, S2, S3, S4) nicht weiter verarbeitet.

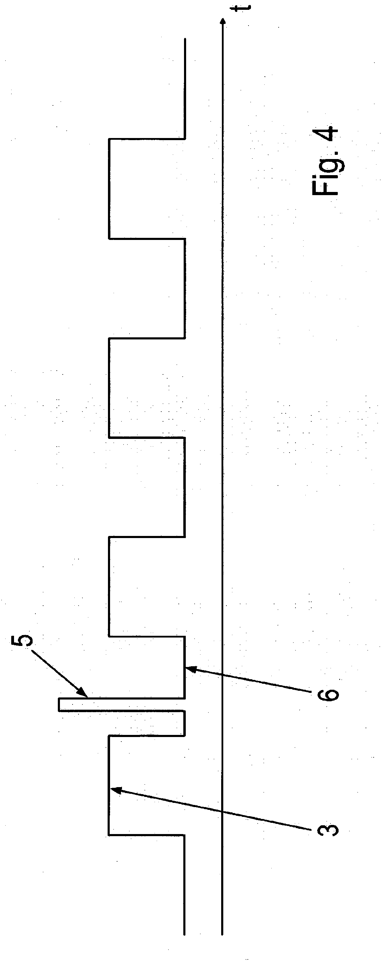

Stellt ein Busteilnehmer (S1, S2, S3, S4) oder das Mastermodul M während einer Sendepause 6 einen Fehler fest, so wird die Sendepause 6 unterbrochen und ein Notsignal 5 von dem jeweiligen Busteilnehmer (S1, S2, S3, S4) oder dem Mastermodul M gesendet, wie in Figur 4 dargestellt. Dieses Notsignal 5 bewirkt eine sofortige Abschaltung aller Busteilnehmer (S1, S2, S3, S4).

Das jeweilige Notsignal 5 wird von dem jeweiligen Busteilnehmer (S1, S2, S3, S4) auf beiden Datenleitungen (1, 2) gesendet. Das Notsignal 5 wird also vom jeweiligen Busteilnehmer (S1, S2, S3, S4) zum Mastermodul M hin auf der zweiten Datenleitung gesendet und vom jeweiligen Busteilnehmer (S1, S2, S3, S4) vom Mastermodul M weg auf der ersten Datenleitung 1 gesendet.

Das jeweilige Notsignal 5 wird von den Busteilnehmern (S1, S2, S3, S4) sofort verarbeitet und gleichzeitig an den nachgeordneten Busteilnehmer (S1, S2, S3, S4) weitergeleitet, so dass die Busteilnehmer (S1, S2, S3, S4) sofort abschalten. Das Notsignal 5 wird also nicht zuerst gespeichert und verarbeitet, sondern sofort an alle Busteilnehmer (S1, S2, S3, S4) und das Mastermodul M weitergeleitet.

Vorzugsweise weist das Notsignal 5 eine zeitlich kürzere Länge auf als die Datenpakete (3, 4) und/oder die Sendepause 6.

### Bezugszeichenliste

M Mastermodul
S1 erster Busteilnehmer
S2 zweiter Busteilnehmer
S3 dritter Busteilnehmer
S4 vierter Busteilnehmer
1 erste Datenleitung
2 zweite Datenleitung
3 Datenpaket
4 Datenpaket
5 Notsignal
6 Sendepause

## Patentansprüche

1. Verfahren zur Integration eines weiteren Busteilnehmers (S1, S2, S3, S4) in ein Bussystem, aufweisend ein Mastermodul (M) und seriell angeordnete Busteilnehmer (S1, S2, S3, S4),
aufweisend die zeitlich aufeinander folgenden Verfahrensschritte:
wobei in einem ersten Verfahrensschritt der weitere Busteilnehmer (S1, S2, S3, S4) ein Datenpaket an das Mastermodul (M) schickt, um sich bei dem Mastermodul (M) anzumelden,
**dadurch gekennzeichnet, dass**
in einem zweiten Verfahrensschritt ein zwischen dem weiteren Busteilnehmer (S1, S2, S3, S4) und dem Mastermodul (M) angeordneter Busteilnehmer (S1, S2, S3, S4) das Datenpaket stoppt und prüft, ob das Bussystem bereits eine Freigabe für den Produktionsmodus nach erfolgreicher Initialisierung erhalten hat,
wobei in einem dritten Verfahrensschritt der **zwischen dem weiteren Busteilnehmer (S1, S2, S3, S4) und dem Mastermodul (M) angeordnete** Busteilnehmer (S1, S2, S3, S4) das Datenpaket an das Mastermodul (M) weiterleitet, wenn das Bussystem bislang keine Freigabe erhalten hat,
oder wobei in einem, insbesondere alternativen, dritten Verfahrensschritt, wenn das Bussystem bereits eine Freigabe erhalten hat, der Busteilnehmer (S1, S2, S3, S4) das Datenpaket speichert und abwartet, bis die Freigabe des Bussystems aufgehoben wird, und, nachdem die Freigabe aufgehoben wurde, das gespeicherte Datenpaket an das Mastermodul (M) weiterleitet.

2. Verfahren zur Integration eines weiteren Busteilnehmers (S1, S2, S3, S4) in ein Bussystem nach Anspruch 1,
**dadurch gekennzeichnet, dass**
zur Initialisierung des Bussystems das Mastermodul (M) die Busteilnehmer (S1, S2, S3, S4) auffordert, sich bei dem Mastermodul (M) anzumelden,
wobei in einem nachfolgenden Verfahrensschritt ein dem Mastermodul (M) nachgeordneter erster Busteilnehmer (S1) sich bei dem Mastermodul (M) anmeldet,
wobei in einem nachfolgenden Verfahrensschritt der erste Busteilnehmer (S1) eine vorgegebene Zeitspanne abwartet, ob ein dem ersten Busteilnehmer (S1) nachgeordneter zweiter Busteilnehmer (S2) sich bei dem Mastermodul (M) anmeldet.

3. Verfahren zur Integration eines weiteren Busteilnehmers (S1, S2, S3, S4) in ein Bussystem nach Anspruch 2,
**dadurch gekennzeichnet, dass**
der erste Busteilnehmer (S1) das Bussystem schließt, falls sich innerhalb der vorgegebenen Zeitspanne kein zweiter Busteilnehmer (S2) bei dem Mastermodul (M) anmeldet.

4. Verfahren zur Integration eines weiteren Busteilnehmers (S1, S2, S3, S4) in ein Bussystem nach Anspruch 2,
**dadurch gekennzeichnet, dass**
ein zweiter Busteilnehmer (S2) sich innerhalb der vorgegebenen Zeitspanne bei dem Mastermodul (M) anmeldet und eine weitere vorgegebene Zeitspanne abwartet, ob ein dem zweiten Busteilnehmer (S2) nachgeordneter dritter Busteilnehmer (S3) sich bei dem Mastermodul (M) anmeldet und der zweite Busteilnehmer (S2) das Bussystem schließt, falls sich innerhalb der weiteren vorgegebenen Zeitspanne kein dritter Busteilnehmer (S3) bei dem Mastermodul (M) anmeldet.

5. Verfahren zur Integration eines weiteren Busteilnehmers (S1, S2, S3, S4) in ein Bussystem nach mindestens einem der vorangegangenen Ansprüche,
**dadurch gekennzeichnet, dass**
die Freigabe durch eine dem Mastermodul (M) übergeordnete Steuerung erteilt und/oder widerrufen wird.

6. Bussystem, wobei ein weiterer Busteilnehmer mittels eines Verfahrens nach mindestens einem der Ansprüche 1 bis 5 in das Bussystem integrierbar ist,
**dadurch gekennzeichnet, dass**
das Bussystem ein Mastermodul (M) und Busteilnehmer (S1, S2, S3, S4) aufweist, die seriell angeordnet sind,
wobei das Mastermodul (M) und die Busteilnehmer (S1, S2, S3, S4) mittels zumindest einer Datenleitung (1, 2) miteinander verbunden sind.

7. Bussystem nach Anspruch 6,
**dadurch gekennzeichnet, dass**
das Bussystem zumindest eine erste Datenleitung (1) und eine zweite Datenleitung (2) aufweist.

8. Bussystem nach Anspruch 7,
**dadurch gekennzeichnet, dass**
mittels der ersten Datenleitung (1) ein Datenpaket (3) vom Mastermodul (M) an die Busteilnehmer (S1, S2, S3, S4) sendbar ist,
und/oder dass
mittels der zweiten Datenleitung (2) ein jeweiliges Datenpaket (3) von einem jeweiligen Busteilnehmer (S1, S2, S3, S4) an das Mastermodul (M) sendbar ist.

9. Bussystem nach mindestens einem der Ansprüche 6 bis 8,
**dadurch gekennzeichnet, dass**
jeder Busteilnehmer (S1, S2, S3, S4) einen Schalter aufweist, wobei der Schalter mit einer jeweiligen Datenleitung (1, 2) verbunden ist,
wobei der Schalter eingerichtet ist, die Datenübertragung entlang der jeweiligen Datenleitung (1, 2) zu unterbrechen.

10. Bussystem nach mindestens einem der Ansprüche 6 bis 9,
**dadurch gekennzeichnet, dass**
jeder Busteilnehmer (S1, S2, S3, S4) ein Zeitmessmittel aufweist.

11. Bussystem nach mindestens einem der Ansprüche 6 bis 10,
**dadurch gekennzeichnet, dass**
jeder Busteilnehmer (S1, S2, S3, S4) eine Logikschaltung aufweist,
insbesondere wobei mittels der Logikschaltung Datenpakete des Mastermoduls (M) und/oder der Busteilnehmer (S1, S2, S3, S4) auswertbar sind.

12. Bussystem nach mindestens einem der Ansprüche 6 bis 11,
**dadurch gekennzeichnet, dass**
jeder Busteilnehmer (S1, S2, S3, S4) eine elektronische Schaltung aufweist,
wobei die elektronische Schaltung den Schalter und/oder das Zeitmessmittel und/oder die Logikschaltung aufweist,
insbesondere wobei der Schalter und/oder das Zeitmessmittel und/oder die Logikschaltung in die elektronische Schaltung integriert sind.

## Claims

1. Method for integrating a further bus subscriber (S1, S2, S3, S4) in a bus system comprising a master module (M) and bus subscribers (S1, S2, S3, S4) arranged in series,
said method comprising the chronologically successive method steps:
wherein in a first method step the further bus subscriber (S1, S2, S3, S4) sends a data packet to the master module (M) in order to register with the master module (M),
**characterized in that**
in a second method step a bus subscriber (S1, S2, S3, S4) arranged between the further bus subscriber (S1, S2, S3, S4) and the master module (M) stops the data packet and checks whether the bus system has already obtained clearance for the production mode after successful initialization,
wherein in a third method step the bus subscriber (S1, S2, S3, S4) arranged between the further bus subscriber (S1, S2, S3, S4) and the master module (M) forwards the data packet to the master module (M) if the bus system has not yet obtained clearance,
or wherein in a third method step, in particular an alternative third method step, if the bus system has already obtained clearance, the bus subscriber (S1, S2, S3, S4) stores the data packet and waits until the clearance of the bus system is cancelled and forwards the stored data packet to the master module (M) once the clearance has been cancelled.

2. Method for integrating a further bus subscriber (S1, S2, S3, S4) in a bus system according to claim 1,
**characterized in that**,
in order to initialize the bus system, the master module (M) invites the bus subscribers (S1, S2, S3, S4) to register with the master module (M),
wherein in a subsequent method step a first bus subscriber (S1) arranged downstream of the master module (M) registers with the master module (M),
wherein in a subsequent method step the first bus subscriber (S1) waits a predefined period of time in order to ascertain whether a second bus subscriber (S2) arranged downstream of the first bus subscriber (S1) registers with the master module (M) .

3. Method for integrating a further bus subscriber (S1, S2, S3, S4) in a bus system according to claim 2,
**characterized in that**
the first bus subscriber (S1) closes the bus system if no second bus subscriber (S2) registers with the master module (M) within the predefined period of time.

4. Method for integrating a further bus subscriber (S1, S2, S3, S4) in a bus system according to claim 2,
**characterized in that**
a second bus subscriber (S2) registers with the master module (M) within the predefined period of time and waits a further predefined period of time in order to ascertain whether a third bus subscriber (S3) arranged downstream of the second bus subscriber (S2) registers with the master module (M), and the second bus subscriber (S2) closes the bus system if no third bus subscriber (S3) registers with the master module (M) within the further predefined period of time.

5. Method for integrating a further bus subscriber (S1, S2, S3, S4) in a bus system according to at least one of the preceding claims,
**characterized in that**
the clearance is granted and/or revoked by a controller superordinate to the master module (M).

6. Bus system, wherein a further bus subscriber can be integrated in the bus system by means of a method according to at least one of claims 1 to 5,
**characterized in that**
the bus system comprises a master module (M) and bus subscribers (S1, S2, S3, S4) which are arranged in series,
wherein the master module (M) and the bus subscribers (S1, S2, S3, S4) are connected to one another by means of at least one data line (1, 2).

7. Bus system according to claim 6,
**characterized in that**
the bus system comprises at least a first data line (1) and a second data line (2).

8. Bus system according to claim 7,
**characterized in that**
a data packet (3) can be transmitted from the master module (M) to the bus subscribers (S1, S2, S3, S4) by means of the first data line (1),
and/or **in that**
a respective data packet (3) can be transmitted from a respective bus subscriber (S1, S2, S3, S4) to the master module (M) by means of the second data line (2).

9. Bus system according to at least one of claims 6 to 8,
**characterized in that**
each bus subscriber (S1, S2, S3, S4) has a switch, wherein the switch is connected to a respective data line (1, 2),
wherein the switch is configured to interrupt the data transmission along the respective data line (1, 2).

10. Bus system according to at least one of claims 6 to 9,
**characterized in that**
each bus subscriber (S1, S2, S3, S4) has a time measuring means.

11. Bus system according to at least one of claims 6 to 10,
**characterized in that**
each bus subscriber (S1, S2, S3, S4) has a logic circuit,
in particular wherein data packets of the master module (M) and/or of the bus subscribers (S1, S2, S3, S4) can be evaluated by means of the logic circuit.

12. Bus system according to at least one of claims 6 to 11,
**characterized in that**
each bus subscriber (S1, S2, S3, S4) has an electronic circuit,
wherein the electronic circuit comprises the switch and/or the time measuring means and/or the logic circuit,
in particular wherein the switch and/or the time measuring means and/or the logic circuit are integrated in the electronic circuit.

## Revendications

1. Procédé d'intégration d'un abonné de bus supplémentaire (S1, S2, S3, S4) dans un système de bus présentant un module maître (M) et des abonnés de bus (S1, S2, S3, S4) disposés en série,
présentant les étapes de procédé successives suivantes :
selon lequel, dans une première étape de procédé, l'abonné de bus supplémentaire (S1, S2, S3, 84) envoie un paquet de données au module maître (M) pour s'enregistrer auprès du module maître (M),
**caractérisé en ce**
**que** dans une deuxième étape de procédé, un abonné de bus (S1, S2, S3, S4) disposé entre l'abonné de bus supplémentaire (S1, S2, S3, S4) et le module maître (M) arrête le paquet de données et vérifie si le système de bus a déjà reçu une validation pour le mode de production après une initialisation réussie,
selon lequel, dans une troisième étape de procédé, l'abonné de bus (S1, S2, S3, S4) disposé entre l'abonné de bus supplémentaire (S1, S2, S3, S4) et le module maître (M) transmet le paquet de données au module maître (M) si le système de bus n'a pas encore reçu une validation,
ou selon lequel, dans une troisième étape de procédé, en particulier alternative, si le système de bus a déjà reçu une validation, l'abonné de bus (S1, S2, S3, S4) stocke le paquet de données et attend que la validation du système de bus soit annulée et, après que la validation a été annulée, transmet le paquet de données stocké au module maître (M).

2. Procédé d'intégration d'un abonné de bus supplémentaire (S1, S2, S3, S4) dans un système de bus selon la revendication 1,
**caractérisé en ce**
**que**, pour initialiser le système de bus, le module maître (M) demande aux abonnés de bus (S1, S2, S3, S4) de s'enregistrer auprès du module maître (M),
selon lequel, dans une étape de procédé suivante, un premier abonné de bus (S1) disposé en aval du module maître (M) s'enregistre auprès du module maître (M),
selon lequel, dans une étape de procédé suivante, le premier abonné de bus (S1) attend un laps de temps prédéfini qu'un deuxième abonné de bus (S2) disposé en aval du premier abonné de bus (S1) s'enregistre auprès du module maître (M).

3. Procédé d'intégration d'un abonné de bus supplémentaire (S1, S2, S3, S4) dans un système de bus selon la revendication 2,
**caractérisé en ce**
**que** le premier abonné de bus (S1) ferme le système de bus si aucun deuxième abonné de bus (S2) ne s'enregistre auprès du module maître (M) dans le laps de temps prédéfini.

4. Procédé d'intégration d'un abonné de bus supplémentaire (S1, S2, S3, S4) dans un système de bus selon la revendication 2,
**caractérisé en ce**
**qu'**un deuxième abonné de bus (S2) s'enregistre auprès du module maître (M) dans le laps de temps prédéfini et attend un laps de temps prédéfini supplémentaire qu'un troisième abonné de bus (S3) disposé en aval du deuxième abonné de bus (S2) s'enregistre auprès du module maître (M) et le deuxième abonné de bus (S2) ferme le système de bus si aucun troisième abonné de bus (S3) ne s'enregistre auprès du module maître (M) dans le laps de temps prédéfini supplémentaire.

5. Procédé d'intégration d'un abonné de bus supplémentaire (S1, S2, S3, S4) dans un système de bus selon au moins l'une des revendications précédentes,
**caractérisé en ce**
**que** la validation est octroyée et/ou révoquée par un dispositif de commande supérieur au module maître (M).

6. Système de bus dans lequel un abonné de bus supplémentaire peut être intégré au moyen d'un procédé selon au moins l'une des revendications 1 à 5,
**caractérisé en ce**
**que** le système de bus présente un module maître (M) et des abonnés de bus (S1, S2, S3, S4) qui sont disposés en série,
dans lequel le module maître (M) et les abonnés de bus (S1, S2, S3, S4) sont reliés entre eux au moyen d'au moins une ligne de données (1, 2).

7. Système de bus selon la revendication 6,
**caractérisé en ce**
**que** le système de bus présente au moins une première ligne de données (1) et une deuxième ligne de données (2).

8. Système de bus selon la revendication 7,
**caractérisé en ce**
**qu'**un paquet de données (3) peut être envoyé par le module maître (M) aux abonnés de bus (S1, S2, S3, S4) au moyen de la première ligne de données (1),
et/ou
**qu'**un paquet de données respectif (3) peut être envoyé par un abonné de bus respectif (S1, S2, S3, S4) au module maître (M) au moyen de la deuxième ligne de données (2).

9. Système de bus selon au moins l'une des revendications 6 à 8,
**caractérisé en ce**
**que** chaque abonné de bus (S1, S2, S3, S4) présente un commutateur, lequel commutateur est relié à une ligne de données respective (1, 2),
dans lequel le commutateur est conçu pour interrompre la transmission de données le long de la ligne de données respective (1, 2).

10. Système de bus selon au moins l'une des revendications 6 à 9,
**caractérisé en ce**
**que** chaque abonné de bus (S1, S2, S3, S4) présente un moyen de mesure du temps.

11. Système de bus selon au moins l'une des revendications 6 à 10,
**caractérisé en ce**
**que** chaque abonné de bus (S1, S2, S3, S4) présente un circuit logique,
en particulier dans lequel des paquets de données du module maître (M) et/ou des abonnés de bus (S1, S2, S3, S4) peuvent être évalués au moyen du circuit logique.

12. Système de bus selon au moins l'une des revendications 6 à 11,
**caractérisé en ce**
**que** chaque abonné de bus (S1, S2, S3, S4) présente un circuit électronique,
lequel circuit électronique présente le commutateur et/ou le moyen de mesure du temps et/ou le circuit logique,
en particulier dans lequel le commutateur et/ou le moyen de mesure du temps et/ou le circuit logique sont intégrés dans le circuit électronique.
